# EUROPÄISCHE PATENTSCHRIFT

(11) **EP 0 660 763 B1**
(45) Veröffentlichungstag und Bekanntmachung des Hinweises auf die Patenterteilung: **06.11.1996**
(21) Anmeldenummer: 94916128.5
(22) Anmeldetag: 09.06.1994
(51) Int. Cl.: B09B 1/00, B09C 1/00

(54) **VERFAHREN UND VORRICHTUNG ZUR MÜLLENTSORGUNG**
PROCESS AND DEVICE FOR WASTE DISPOSAL
PROCEDE ET INSTALLATION POUR L'ELIMINATION DES ORDURES

(30) Priorität: 19.07.1993 CH 2174/93
(43) Veröffentlichungstag der Anmeldung: 05.07.1995
(73) Patentinhaber: Unitechnic Anstalt, FL-9497 Triesenberg (LI)
(72) Erfinder: BURGERT, Herbert, A., FL-9497 Triesenberg (LI)
(74) Vertreter: Salgo, Reinhold Caspar, Dr.
(86) Internationale Anmeldenummer: CH9400115
(87) Internationale Veröffentlichungsnummer: WO9503141

(56) Entgegenhaltungen:
- EP-A- 0 471 363
- DE-A- 3 932 906
- DE-C- 4 133 802
- US-A- 5 203 644

## Beschreibung

Die vorliegende Erfindung betrifft ein Verfahren und eine nach dem Verfahren arbeitende Vorrichtung zur Entsorgung von Müll, insbesondere von auf Halden und Deponien gelagertem Müll, nach den Oberbegriffen des Patentanspruches 11 hinsichtlich des Verfahrens und des Patentanspruches 1 hinsichtlich der Vorrichtung.
Unter Müll wird im folgenden verstanden: Hausmüll, Industrieabfälle, Bauschutt und Sondermüll aller Arten. Solcher Müll wird zwar an vielen Orten verbrannt, der grösste Teil des täglich anfallenden Mülls wird jedoch auf Halden oder Deponien zumindest längere Zeit zwischengelagert. Vielerorts bestehen zudem Altlasten teilweise hochgiftigen Industriemülls, die eine eminente Gefährdung der Umwelt darstellen, weil die abgelagerten Stoffe entweder direkt oder durch Produkte, welche durch in den Halden ablaufende chemische Reaktionen entstehen, ins Grundwasser und/oder in die Luft gelangen.
Während die Entsorgung laufend anfallenden Mülls an sich durch verschiedene bekannte Verfahren der Verbrennung, der Pyrolyse und der Hochtemperaturvergasung als gelöst gelten darf, - obwohl auch hier laufend verbesserte Verfahren entwickelt werden - ist die Entsorgung von Müllhalden und -Deponien mit grossen Problemen verbunden, sobald solche Halden angeschnitten werden. Insbesondere werden Staub, Gase, Schlämme und Aerosole freigesetzt, die eine Gefährdung für die Umwelt, zuallermindest aber eine Belästigung darstellen.
Die Aufgabe der Erfindung ist es, ein Verfahren und eine nach dem Verfahren arbeitende Vorrichtung zu schaffen, die die genannten Umweltgefährdungen und -Belästigungen vermeidet.
Die Lösung der gestellten Aufgabe ist wiedergegeben im Patentanspruch 11 hinsichtlich des Verfahrens und im Patentanspruch 1 hinsichtlich der Vorrichtung.
Die Erfindung wird anschliessend, gestützt durch die beiliegenden Zeichnungen, näher erläutert. Es zeigen
- Fig.1: eine schematische Seitenansicht eines ersten Ausführungsbeispiels der erfindungsgemässen Vorrichtung,
- Fig.2: eine schematische Draufsicht des Ausführungsbeispiels von Fig.1,
- Fig.3a: ein erstes Ausführungsbeispiel eines Details der Vorrichtung,
- Fig.3b: ein zweites Ausführungsbeispiel eines Details der Vorrichtung,
- Fig. 4: eine Zusammenstellung der Details gemäss Fig.3a,b,
- Fig.5: eine schematische Seitenansicht eines zweiten Ausführungsbeispiels der erfindungsgemässen Vorrichtung,
- Fig.6: eine schematische Seitenansicht eines dritten Ausführungsbeispiels der erfindungsgemässen Vorrichtung.

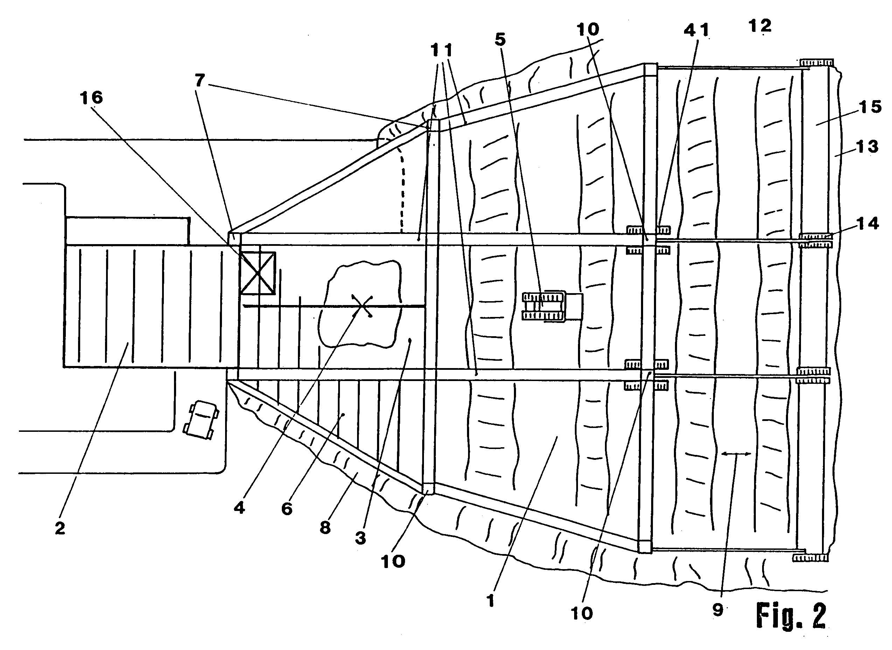

Die erfinderische Verfahrensidee ist es, die abzutragende und der Verwertung zuzuführende Deponie ganz, oder in jenem Teilbereich, der durch maschinelle Mittel angeschnitten und abgebaut wird, abzudecken und unter Unterdruck zu setzen. Dieser Bereich, in welchem ein verminderter Druck erzeugt und aufrecht erhalten wird, umfasst nicht nur den genannten Teilbereich der Deponie - oder allenfalls die Deponie zur Gänze - sondern auch die Transportwege von der Deponie zur Verwertungsvorrichtung und deren Umschlags- und Vorfeld. Zweckmässigerweise wird deshalb der Standort der Verwertungsanlage so nahe als möglich bei der abzutragenden Halde oder Deponie gewählt.
Gleichzeitig werden geeignete Mittel in die Deponie selbst - vorzugsweise in deren Fussbereich - eingebracht, mit denen in deren Innerem entstehende oder vorhandene Gase und Flüssigkeiten, bzw. Schlämme abgesaugt und ebenfalls der Verwertung zugeführt werden.
Mit zum erfinderischen Verfahrensgedanken gehört es, dass die durch Gase, Staub und Aerosole belastete Luft, die bei der Druckverminderung der genannten Bereiche anfällt, ebenfalls in der Verwertungsvorrichtung aufgenommen und mitverwertet wird.
Ferner ist es Teil des erfinderischen Verfahrens, dass die Verwertungsvorrichtung in ihrem Umschlags- und Vorfeld so eingerichtet ist, dass auch Mülltransportfahrzeuge den täglich anfallenden Haus- und Industriemüll anliefern können.

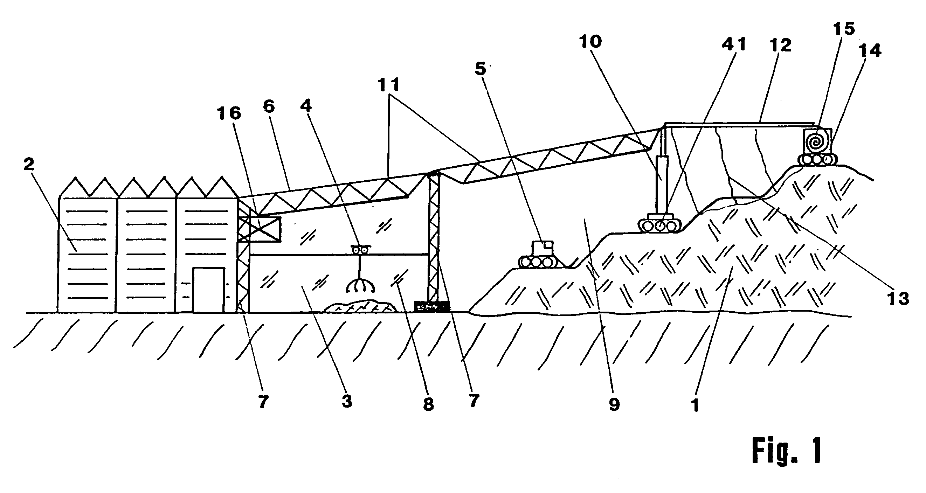

In Fig. 1, welche eine schematische Seitenansicht einer erfindungsgemässen Vorrichtung in einem ersten Ausführungsbeispiel darstellt, ist eine der Verwertung zuzuführende Mülldeponie mit der Ziffer 1 bezeichnet. Am Fuss der Mülldeponie 1 oder in dessen Nähe ist eine Verwertungsvorrichtung 2 errichtet, die nach einem der bekannten Verfahren, vorzugsweise nach jenem der Hochtemperaturvergasung, arbeitet. Ein Vorfeld 3 enthält die technischen Mittel - wie beispielsweise einen schematisch dargestellten Greiferkran 4 - zum Umschlag des von Ladefahrzeugen 5 (in Fig. 1 ist eines davon dargestellt) antransportierten Mülls.
Die gleiche erfindungsgemässe Anlage, die in Fig. 1 von der Seite gezeigt wird, ist in Fig. 2 in einer schematischen Draufsicht dargestellt. Das Vorfeld 3 ist überdacht durch ein vorzugsweise festes Dach 6, bestehend aus Leichtbauelementen, die im wesentlichen luftdicht aneinander gefügt sind. Das Dach 6 ruht auf festen Stützen 7. Seitlich sind Wände 8 luftdicht an das Dach 6 angeschlossen, die ihrerseits im wesentlichen luftdicht sind. Ebenfalls luftdicht ist der Anschluss der Wände 8 und des Daches 6 an die dem Vorfeld 3 zugewandte Fassade der Verwertungsvorrichtung 2 ausgestaltet. Die Wände 8 können ebenfalls aus Leichtbauplatten oder aber aus Planen bestehen, welche an ihren unteren Säumen in bekannter Weise wie bei Traglufthallen luftdicht am Boden anliegen.
An das Vorfeld 3 schliesst sich ein eigentlicher Abbaubereich 9 an. In diesem befinden sich geeignete Mittel zum Tragen von beweglichen Stützen 10, beispielsweise Raupenfahrzeuge 41, welche die vorzugsweise in ihrer Höhe veränderlichen beweglichen Stützen 10 tragen. Zwischen die festen Stützen 7 und die beweglichen Stützen 10 sind Leichtbau-Träger 11 eingefügt, welche in ihrer Gesamtheit ein bewegliches Dach-Tragwerk bilden. Dieses Tragwerk ist vorzugsweise von geeigneten Planen 12 überzogen, welche mit weiteren, seitlichen Planen 13 den ganzen Abbaubereich 9 luftdicht abschliessen. Anstelle benannter Ladefahrzeuge 5 können auch robotergesteuerte eingesetzt werden. Ebenso sind Löffelbagger und Schrämm-Vorrichtungen denkbar. Die Abbaumethoden sind an sich bekannt und nicht erfindungswesentlich.

In Fig. 1 und 2 ist noch ein Fahrzeug 14 dargestellt, welches eine Planenrolle 15 trägt und dazu geeignet und vorgesehen ist, die Abdeckung des Abbaubereiches laufend dem Fortschritt des Abbaus anzupassen.
Das Vorfeld 3 und der gesamte Abbaubereich 9 ist nun gegen die übrige Aussenwelt luftdicht abgeschlossen. Mit einer geeigneten Absaugvorrichtung 16 - beispielsweise Tangential- oder Axiallüftern - wird nun der Druck des wie beschrieben abgedichteten Raumes etwas abgesenkt im Bereich von etwa 10 Pa bis 100 Pa. Damit wirken entsprechende Kräfte im Bereich von etwa 10 N bis 100 N je m2 Dach- und Wandfläche, was keine besonderen technischen Probleme aufwirft, da solche Kräfte im Bereich üblicher Wind- und Schneelasten liegen.
Damit ist dafür gesorgt, dass keinerlei Staub, Gase und Aerosole aus dem durch Dach 9, 12 und Seitenwände 8, 13 abgegrenzten Innenraum austreten können.
Die Abluft der Absaugvorrichtung 16 wird der Verwertungsvorrichtung 2 zugeführt.
Die Verwertungsvorrichtung 2 weist ein Tor 18 mit dahinterliegender - nicht gezeichneter - Luftschleuse auf. Damit ist gewährleistet, dass Müllfahrzeuge aktuellen Haus- und Industriemüll anliefern können. Dies kann aus betrieblichen und/oder ökologischen Gründen angezeigt sein.
Es ist selbstverständlich im Sinne der Erfindung, mehrere Verwertungsvorrichtungen 2 nebeneinander zu erstellen, besonders dann, wenn aus verfahrenstechnischen Gründen der Grösse einer solchen Vorrichtung praktische obere Grenzen gesetzt sind.

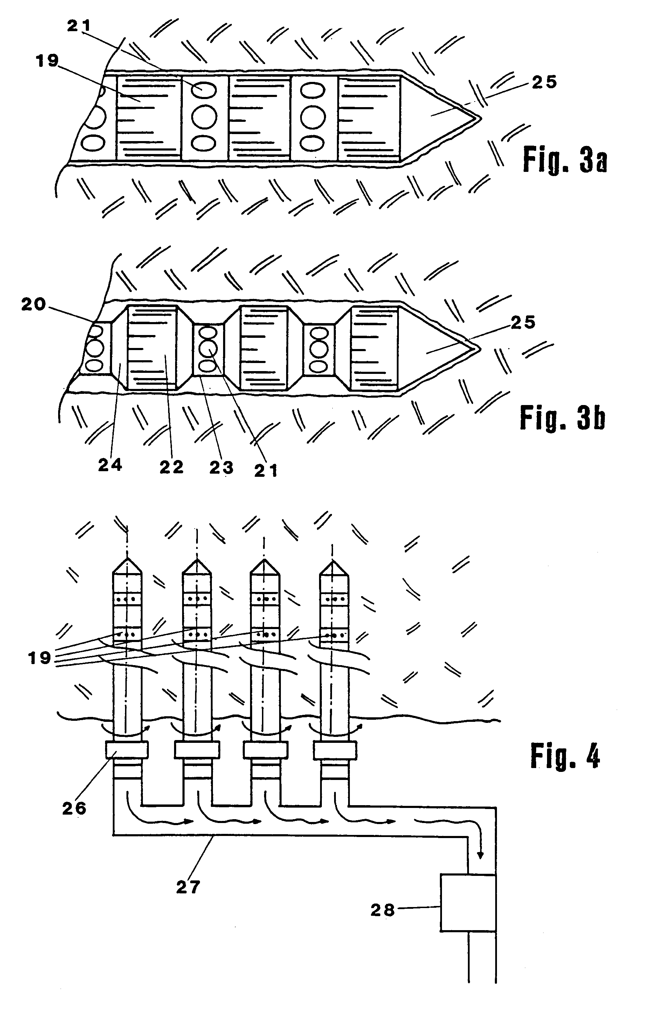

Fig. 3a, b zeigen zwei Ausführungsbeispiele von Drainage-Lanzen 19, 20. Die erste Drainage-Lanze 19 besteht aus einem zylindrischen Rohr, welches Löcher 21 trägt, die beispielsweise zu Bändern vereinigt, auf dem Umfang und der Länge des Rohres angeordnet sind. Die zweite Drainage-Lanze besteht aus ersten zylindrischen Abschnitten 22 eines bestimmten Durchmessers und zweiten zylindrischen Abschnitten 23 eines kleineren Durchmessers, welche zwischen die ersten zylindrischen Abschnitte 22 mit dem grösseren Durchmesser angeordnet sind. Die Uebergänge zwischen den ersten und zweiten zylindrischen Abschnitten werden durch kegelstumpfförmige Abschnitte 24 gebildet. Die Abschnitte 22, 23, 24 sind beispielsweise untereinander verschweisst. Die zweiten zylindrischen Abschnitte mit dem kleineren Durchmesser tragen, auf ihrem Umfange verteilt, ebenfalls Löcher 21.
Beide Ausführungsformen der Drainage-Lanzen 19, 20 tragen eine Spitze 25. Die Drainage-Lanzen können entweder direkt - beispielsweise mit hydraulischen Vortriebsmitteln - in die Mülldeponie 1 eingebracht werden, oder aber in (nicht gezeichnete) Drainage-Rohre eingesetzt werden, welche ihrerseits Löcher aufweisen.
Wie in Fig. 4 gezeigt, ist vorgesehen, eine Vielzahl von Drainage-Lanzen 19 oder 20 zu einer Batterie zusammenzufassen.
Die einzelnen Drainage-Lanzen 19 oder 20 münden dann in ein gemeinsames Absaugrohr 27. An diesem befindet sich eine weitere Absaugvorrichtung 28, deren Ausstoss wiederum der Verwertungsvorrichtung 2 zugeführt wird. Jede Drainage-Lanze 19, 20 ist mit Antriebsmitteln 26 gekoppelt, die gestatten, die Drainage-Lanze 19, 20 um ihre Längsachse zu drehen.
Die genannten Drainage-Lanzen 19, 20 werden zur Ausführung des erfindungsgemässen Verfahrens im Abbaubereich 9 der Mülldeponie 1 vorzugsweise von allen zugänglichen Seiten in die Sohlenregion der Mülldeponie 1 eingebracht. Damit können in der Mülldeponie 1 entstehende Gase und eingesickerte Flüssigkeiten laufend abgeführt werden.

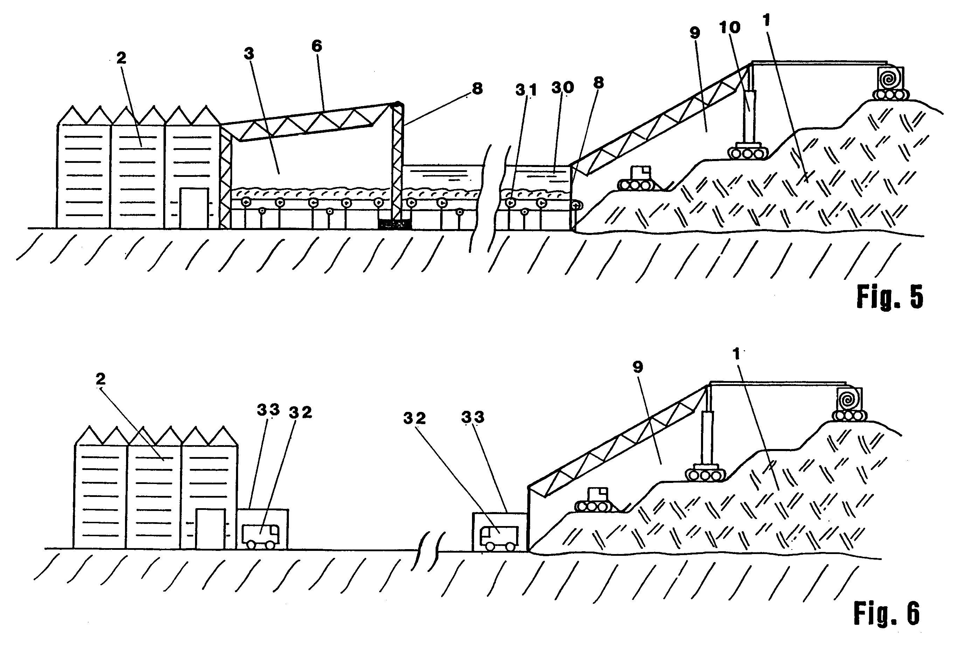

Wenn bei fortschreitendem Abbau der Mülldeponie 1 die Distanz zwischen dem Abbaubereich 9 und der Verwertungsvorrichtung 2 und ihrem Vorfeld 3 grösser wird, werden sowohl die erfindungsgemässe Vorrichtung als auch das erfindungsgemässe Verfahren diesem Umstande angepasst. Fig. 5 zeigt eine erste Variante hiezu.
Die aus dem Dache 6 und den Wänden 8 bestehende Hülle des Vorfeldes 3 wird allenfalls den veränderten Bedürfnissen insofern angepasst, als das Vorfeld 3 im wesentlichen noch als Luftschleuse für die Zubringervorrichtungen und den Müllumschlag dienen muss. Der Abbaubereich 9 mit seinen beweglichen Stützen 10 schiebt sich verfahrensgemäss weiter von der Verwertungsvorrichtung 2 weg. Dadurch wird der Transportweg für den Müll länger. Die aus Dach 6 und die aus Planen 9 bestehenden Seitenwänden gebildete Hülle im reinen Transportbereich wird abgebrochen. Zwischen dem Abbaubereich 9 und dem Vorfeld 3 wird ein Tunnel 30, beispielsweise bestehend aus Kunststoff-Elementen, aufgebaut, welcher eine Förderbandanlage 31 beherbergt und luftdicht von der Aussenwelt abschliesst. Da sowohl Tunnel 30, als auch Förderbandanlage 31 aus Teilstücken bestehen, ist eine stufenweise Verlängerung des Transportweges leicht möglich. Der Tunnel 30 dient beispielsweise gleichzeitig als Leitungsrohr für die vom Abbaubereich 9 abgepumpte Luft und ist entsprechend dimensioniert. Die dem Abbaubereich 9 zugewandte Seite des Vorfeldes 3 wird in diesem Stadium des Abbau- und Verwertungsverfahrens ebenfalls mit einer Wand 8 zum luftdichten Abschluss des Vorfeldes 3 versehen.
In der zweiten Variante gemäss Fig. 6 werden anstelle der Förderbandanlage 31 geschlossene Transportfahrzeuge 32 eingesetzt. Diese werden im Abbaubereich 9 beladen und in der Verwertungsvorrichtung 2 entladen. Damit der erforderliche Unterdruck im Abbaubereich 9 aufrechterhalten werden kann, ist dieser um eine - oder mehrere - Luftschleusen 33 ergänzt. Die Verwertungsvorrichtung 2 ist hier - anstelle des Vorfeldes 3 - mit einer Luftschleuse 33 versehen. Die geschlossenen Transportfahrzeuge weisen ebenfalls Mittel auf, die Luft im Laderaum soweit abzupumpen, damit die gleiche Druckdifferenz im Bereiche von 10 Pa bis 100 Pa eingestellt werden kann. Die genannten Mittel bestehen beispielsweise aus Tangential- oder Axiallüftern, die ihren Ausstoss - über geeignete Filteranlagen - dem Ansaugrohr des Fahrmotors zuleiten.
Der Abbaubereich 9 ist zudem mit der Verwertungsvorrichtung 2 mit - nicht dargestellten - Rohrleitungen verbunden, welche einerseits die Luftmengen transportieren, welche zum Aufrechterhalten des vorgesehenen Unterdruckes im Abbaubereich notwendig sind, anderseits die Gase und Flüssigkeiten der Verwertungsvorrichtung 2 zuleiten, welche dem Sohlenbereich der Mülldeponie 1 mittels der genannten Lanzen 19 oder 20 entzogen werden.
Es kann ferner angezeigt sein, für mehrere, unter Umständen weit auseinanderliegende abzubauende Mülldeponien 1 eine einzige Verwertungsvorrichtung 2 zu erstellen. Den erforderlichen Unterdruck unter den Abdeckungen der Mülldeponien 1 zentral zu erzeugen, ist dann unpraktikabel. In dieser - nicht gezeichneten - Variante ist jeder Mülldeponie 1 eine Absaugvorrichtung 16 zugeteilt und eine Verbrennungsvorrichtung, welche lediglich die Aufgabe hat, die mit schädlichen Gasen und Stäuben beladene Abluft zu entsorgen. Falls es aus den Gegebenheiten der Mülldeponie 1 notwendig ist auch die erfindungsgemässen Drainagelanzen 19 oder 20 einzusetzen, so ist auch diesen innerhalb des Abbaubereiches 9 eine Absaugvorrichtung 28 zugeordnet. Die abgesaugten Flüssigkeiten und Schlämme werden durch die Transportfahrzeugen 32 an die Verwertungsvorrichtung 2 überbracht.

## Patentansprüche

1. Vorrichtung zum Entsorgen von Müll, insbesondere von auf Halden und Müll-Deponien (1) gelagertem Müll, mit einer auf hohen Temperaturen arbeitenden Verwertungsvorrichtung (2) und mechanischen Mitteln zum Abbau der Mülldeponie (1), dadurch gekennzeichnet, dass
- die Mülldeponie (1) mindestens in einem Abbaubereich (9) und die Verwertungsvorrichtung (2) in einem Vorfeld (3) Abdeckungen aufweisen, bestehend aus einem Dach (6) und seitlich angebrachten Wänden (8), welche ihrerseits luftdicht sind, und sowohl gegeneinander, als auch gegen den ausserhalb der Mülldeponie (1) liegenden Erdboden luftdicht angeschlossen werden können,
- feste Stützen (7) vorhanden sind, welche mindestens das Dach (6) und die Wände (8) der Abdeckung des Vorfeldes (3) tragen,
- bewegliche Stützen (10) vorhanden sind, welche Leichtbauträger (11) tragen, welche ihrerseits das Tragwerk bilden für Planen (12, 13), aus welchen die Abdeckung des Abbaubereiches (9) besteht,
- mechanische Mittel zum Abbau der Mülldeponie (1) im Abbaubereich vorhanden sind,
- mechanische Mittel vorhanden sind zum Transport des abgebauten Mülls vom Abbaubereich (9) zum Vorfeld der Verwertungsvorrichtung (2),
- erste Absaugvorrichtungen (16) vorhanden sind zur Erzeugung eines Unterdrucks im abgedeckten Vorfelde (3) der Verwertungsvorrichtung (2) und im Abbaubereich (9), welcher Unterdruck sich bezieht auf den Raum ausserhalb sowohl der durch Dach (6) und Wände (8) als auch der Planen (12, 13) gebildeten Abdeckungen anderseits,
- dieser genannte Unterdruck im Bereich von 10 bis 100 Pa liegt,
- die Vorrichtung ferner besteht aus Drainage-Lanzen (19, 20), welche in die Mülldeponie im Abbaubereich eingebracht werden, welche Dainage-Lanzen (19, 20) rohrförmig sind und eine Spitze (25) und seitliche Löcher (21) aufweisen zum Absaugen von in der Mülldeponie (1) vorhandenen Gasen und Flüssigkeiten, wobei die Drainage-Lanzen (19, 20) in Batterien zusammengefasst werden können und in ein gemeinsames Absaugrohr (27) münden,
- jede der genannten Drainage-Lanzen (19, 20) Antriebsmittel (26) aufweist zur Erzeugung einer axialen Drehbewegung,
- weitere Absaugvorrichtungen (28) vorhanden sind mit welchen im Inneren der Drainage-Lanzen (19, 20) ein Unterdruck erzeugt werden kann zum Absaugen von in der Mülldeponie (1) vorhandenen Gase und Flüssigkeiten,
- Mittel vorhanden sind, um der Verwertungsvorrichtung (2) sowohl den Ausstoss der ersten, als auch der weiteren Absaugvorrichtungen (16, 28) dem in der Verwertungsvorrichtung (2) ablaufenden Verwertungsprozess zuzuführen.

2. Vorrichtung nach Patentanspruch 1, dadurch gekennzeichnet, dass das Vorfeld (3) und der Absaugbereich (9) unter einer Abdeckung zusammengefasst sind, und dass die mechanischen Mittel zum Transport des abgebauten Mülls vom Abbaubereich (9) zum Vorfeld (3) aus Greiferkranen (4) bestehen.

3. Vorrichtung nach Patentanspruch 1, dadurch gekennzeichnet, dass der Abbaubereich (9) vom Vorfeld (3) getrennt ist durch einen nicht abgedeckten und nicht unter Unterdruck gesetzten Zwischenbereich.

4. Vorrichtung nach Patentanspruch 3, dadurch gekennzeichnet, dass
- die mechanischen Mittel zum Transport des abgebauten Mülls vom Abbaubereich (9) zum Vorfeld (3) bestehen aus einer Förderbandanlage (31),
- ein Tunnel (30) vorhanden ist, in welchem die Förderbandanlage (31) aufgebaut ist, welcher Tunnel (30) sich erstreckt vom Abbaubereich (9) zum Vorfeld (3),
- welcher Tunnel (30) einerseits luftdicht ist, anderseits luftdichte Anschlüsse an die Wände (8) des Vorfeldes (3) und des Abbaubereiches (9) aufweist.

5. Vorrichtung nach Patentanspruch 3, dadurch gekennzeichnet, dass
- die mechanischen Mittel zum Transport des abgebauten Mülls vom Abbaubereich (9) zum Vorfeld (3) bestehen aus Transportfahrzeugen (32), welche einen luftdichten und unter Unterdruck setzbaren Aufbau aufweisen,
- dass sowohl der Abbaubereich (9) als auch das Vorfeld (3) je mindestens eine Luftschleuse (33) aufweisen, durch welche die Transportfahrzeuge (32) ein- und ausfahren können, ohne den im Abbaubereich (9) und dem Vorfeld (3) aufgebauten Unterdruck zu brechen,
- der Abbaubereich (9) mit dem Vorfeld (3) durch eine erste Rohrleitung verbunden ist, welche ihrerseits an die erste Absaugvorrichtung (16) angeschlossen ist, durch welche Rohrleitung der Unterdruck im Abbaubereich (9) aufgebaut und gehalten werden kann,
- der Abbaubereich (9) mit dem Vorfelde (3) durch eine zweite Rohrleitung verbunden ist, in welche die Absaugrohre (27) der Drainage-Lanzen (19, 20) münden, und welche zweite Rohrleitung im Vorfelde (3) an eine zweite Absaugvorrichtung (28) angeschlossen ist, welche zweite Absaugvorrichtung den Unterdruck in den Drainage-Lanzen (19, 20) aufbauen und halten kann.

6. Vorrichtung nach Patentanspruch 3, dadurch gekennzeichnet, dass
- der Abbaubereich (9) eine eigene Absaugvorrichtung aufweist zur Erzeugung des vorgesehenen Unterdruckes,
- der Abbaubereich (9) eine Verwertungsvorrichtung für die mit schädlichen Gasen und Stäuben beladene Abluft der Absaugvorrichtung (16) aufweist,
- die aus Drainagelanzen (19, 20) bestehende Anlage innerhalb des Abbaubereiches (9) eine eigene Absaugvorrichtung (28) aufweist, welche so angeordnet ist, dass die abgesaugten Flüssigkeiten und Schlämme innerhalb des unter Unterdruck stehenden Abbaubereiches (9) auf die Transportfahrzeuge (32) verladen werden können.

7. Vorrichtung nach Patentanspruch 1, dadurch gekennzeichnet, dass die Drainage-Lanzen (19) zylindrisch ausgebildet sind.

8. Vorrichtung nach Patentanspruch 1, dadurch gekennzeichnet, dass die Drainage-Lanzen (29) bestehen aus zylindrischen Abschnitten mit kleinerem und solchen mit grösserem Durchmesser, wobei die jeweils zylindrischen Abschnitte durch solche von kegelstumpfförmiger Gestalt verbunden sind, und die Löcher (21) nur auf den zylindrischen Abschnitten mit kleinerem Durchmesser angebracht sind.

9. Vorrichtung nach Patentanspruch 7 oder 8, dadurch gekennzeichnet, dass die Drainage-Lanzen (19, 20) direkt in die Müllhalde (1) eingebracht sind.

10. Vorrichtung nach Patentanspruch 7 oder 8, dadurch gekennzeichnet, dass die Drainage-Lanzen (19, 20) in mit Löchern versehene Drainagerohre eingebracht sind, welche ihrerseits in die Müllhalde (1) eingebracht sind.

11. Verfahren zum Entsorgen von Mülldeponien (1) mit einer auf hohen Temperaturen arbeitenden Verwertungsvorrichtung (2) und mechanischen Mitteln zum Abbau der Mülldeponie (1) und solchen zum Abtransport des abgebauten Mülls, dadurch gekennzeichnet, dass
- die Mülldeponie (1) zumindest im Abbaubereich (9) mit einem Dach (6) und seitlichen, aus Planen (13) bestehenden Wänden abgedeckt wird,
- das Vorfeld (3) der Verwertungsvorrichtung (2) ebenfalls mit einem Dach (6) und Wänden (8) abgedeckt wird,
- die genannten Abdeckungen luftdicht gemacht und unter einen Unterdruck im Bereich von 10 bis 100 Pa gesetzt werden,
- in die Mülldeponie (1) im Bereich der Sohle des Abbaubereiches Drainage-Lanzen (19, 20) eingebracht werden, in welchen ebenfalls ein Unterdruck aufgebaut wird, und welche in der Mülldeponie vorhandene und entstehende Gase und Flüssigkeiten absaugen können,
- die Gase, Staube und Aerosole, welche aus dem Abbaubereich (9) abgesaugt werden, einer Verwertungsvorrichtung zugeführt werden,
- die Gase und Flüssigkeiten, welche mittels der Drainage-Lanzen (19, 20) abgesaugt werden, der Verwertungsvorrichtung (2) zugeführt werden.

12. Verfahren zum Entsorgen von Mülldeponien (1) nach Patentanspruch 11, dadurch gekennzeichnet, dass der Transport des abgebauten Mülls durch eine Förderbandanlage (31) erfolgt, welche in einem unter Unterdruck stehenden Tunnel (30) verläuft.

13. Verfahren zum Entsorgen von Mülldeponien (1) nach Patentanspruch 11, dadurch gekennzeichnet, dass der Transport des abgebauten Mülls durch Transportfahrzeuge (32) erfolgt, deren Laderaum unter Unterdruck setzbar ist.

## Claims

1. A device for removing rubbish, especially rubbish deposited on dumps and tips (1), comprising a utilisation device (2) operating at high temperatures and mechanical means for removing the rubbish from the dump (1), characterised in that
- the rubbish dump (1) has a cover, at least in a removal region (9) and the utilisation device (2) has a cover, at least in an apron (3), the covers comprising a roof (6) and side walls (8) which are airtight and can be connected in airtight manner, relative to one another and also relative to the ground underneath the dump (1),
- fixed uprights (7) are provided and support at least the roof (6) and the walls (8) of the cover over the apron (3),
- movable supports (10) are provided and bear light-construction girders (11) which in turn form the framework for cover sheets (12, 13) which make up the cover over the removal region (9),
- mechanical means are provided for clearing the dump (1) in the removal region,
- mechanical means are provided for conveying the removed rubbish from the removal region (9) to the apron of the utilisation device (2),
- first suction devices (16) are provided for generating a negative pressure in the covered apron (3) of the utilisation device (2) and in the removal region (9), the negative pressure relating to the space outside both the covers formed by the roof (6) and walls (8) and also the cover sheets (12, 13) on the other hand,
- the negative pressure is in the range from 10 to 100 Pa,
- the device also comprises drainage lances (19, 20) which are inserted into the dump in the removal region, the lances (19, 20) being tubular and having a tip (25) and side holes (21) for sucking up gases and liquids in the dump (1), the drainage lances (19, 20) optionally being combined in batteries and opening into a common suction pipe (27),
- each of the said drainage lances (19, 20) has driving means (26) for generating axial movement in rotation,
- other suction devices (28) are provided and are adapted to generate a negative pressure inside the drainage lances (19, 20) in order to suck gases and liquids out of the dump (1), and
- means are provided for supplying the material ejected from the first and also from the other suction devices (16, 18) to the utilisation process occurring in the utilisation device (2).

2. A device according to claim 1, characterised in that the apron (3) and the suction region (9) are combined under a single cover, and the mechanical means for conveying the removed rubbish from the removal region (9) to the apron (3) comprise grab cranes (4).

3. A device according to claim 1, characterised in that the removal region (9) is separated from the apron (3) by an intermediate region which is not covered and not under negative pressure.

4. A device according to claim 3, characterised in that
- the mechanical means for conveying the removed rubbish from the removal region (9) to the apron (3) comprise a conveyor-belt system (31),
- a tunnel (30) is provided and the conveyor-belt system (31) is constructed therein, the tunnel (30) extending from the removal region (9) to the apron (3), and
- the tunnel (30) is airtight at one end whereas the other end has airtight connections to the wall (8) of the apron (3) and the wall (8) of the removal region (9).

5. A device according to claim 3, characterised in that
- the mechanical means for conveying the removed rubbish from the removal region (9) to the apron (3) comprise transport vehicles (32) which have an airtight construction which can be put under negative pressure,
- both the removal region (9) and the apron (3) have at least one air lock (33) through which the transport vehicles (32) can go in and out without breaking the negative pressure which has been built up in the removal region (9) and the apron (3),
- the removal region (9) is connected to the apron (3) by a first pipe which in turn is connected to the first suction device (16), the negative pressure in the removal region (9) being adapted to be built up and maintained through the said pipe,
- the removal region (9) is connected to the apron (3) by a second pipe into which the suction tubes (27) of the drainage lances (19, 20) open, and the second pipe is connected in the apron (3) to a second suction device (28), which second suction device is adapted to build up and maintain the negative pressure in the drainage lances (19, 20).

6. A device according to claim 3, characterised in that
- the removal region (9) has a separate suction device for generating the required negative pressure,
- the removal region (9) has a utilisation device for the waste air charged with harmful gases and dust from the suction device (16), and
- the installation comprising the drainage lances (19, 20) has a separate suction device (28) inside the removal region (9) and disposed so that the sucked liquids and sludge can be loaded on to the transport vehicles (32) inside the removal region (9) under negative pressure.

7. A device according to claim 1, characterised in that the drainage lances (19) are cylindrical.

8. A device according to claim 1, characterised in that the drainage lances (29) comprise cylindrical portions having relatively small-diameter and larger-diameter portions, the cylindrical portions being connected by frusto-conical portions and the holes (21) being formed only on the smaller-diameter cylindrical portions.

9. A device according to claim 7 or 8, characterised in that the drainage lances (19, 20) are inserted directly into the rubbish dump (1).

10. A device according to claim 7 or 8, characterised in that the drainage lances (19, 20) are inserted into perforated drainage tubes which in turn are inserted into the rubbish dump (1).

11. A method of disposing of rubbish dumps (1), comprising a utilisation device (2) operating at high temperatures and mechanical means for clearing the dump (1) and for carrying off the removed rubbish, characterised in that
- the rubbish dump (1), at least in the removal region (9), is covered by a roof (9) and side walls comprising cover sheets (13),
- the apron (3) of the utilisation device (2) is also covered by a roof (6) and walls (8),
- the said covers are made airtight and subjected to a negative pressure in the range from 10 to 100 Pa,
- drainage lances (19, 20) are inserted into the rubbish dump (1) near the bottom of the removal region and a negative pressure is likewise built up in the drainage lances, which are adapted to suck gases and liquids present or evolved in the rubbish dump,
- the gases, dust and aerosols sucked from the removal region (9) are supplied to a utilisation device, and
- the gases and liquids sucked out by the drainage lances (19, 20) are supplied to the utilisation device (2).

12. A method of disposing of rubbish dumps (1) according to claim 11, characterised in that the removed rubbish is conveyed by a conveyor-belt system (31) which runs in a tunnel (30) under negative pressure.

13. A method of disposing of rubbish dumps (1) according to claim 11, characterised in that the removed rubbish is conveyed by transport vehicles (32) which have a loading space which can be negatively pressurised.

## Revendications

1. Dispositif pour l'élimination des déchets, en particulier de déchets déversés sur des terrils et dans des décharges (1), comportant un dispositif de récupération (2) fonctionnant à des températures élevées et des moyens mécaniques pour creuser dans la décharge (1), caractérisé
- en ce que la décharge (1) et le dispositif de récupération (2) comportent respectivement au moins dans une zone de creusement (9) et dans une zone préliminaire (3) des recouvrements formés d'un toit (6) et de parois (8) montées sur les côtés qui sont eux-mêmes étanches à l'air et qui peuvent être reliés hermétiquement aussi bien l'un par rapport à l'autre que par rapport au sol situé à l'extérieur de la décharge (1),
- en ce qu'il est prévu des poteaux fixes (7) qui portent au moins le toit (6) et les parois (8) du recouvrement de la zone préliminaire (3),
- en ce qu'il est prévu des poteaux mobiles (10) qui portent des poutres légères (11) formant elles-mêmes la structure porteuse pour des bâches (12, 13) qui constituent le recouvrement de la zone de creusement (9),
- en ce que des moyens mécaniques sont prévus dans la zone de creusement (9) pour creuser dans la décharge (1),
- en ce qu'il est prévu des moyens mécaniques pour transporter les déchets extraits de la zone de creusement (9) vers la zone préliminaire du dispositif de récupération (2),
- en ce qu'il est prévu des premiers dispositifs d'aspiration (16) pour générer une dépression dans la zone préliminaire couverte (3) du dispositif de récupération (2) et dans la zone de creusement (9), laquelle dépression est générée par rapport à l'espace situé à l'extérieur des recouvrements formés par le toit (6) et les parois (8) et à l'extérieur des recouvrements formés par les bâches (12, 13),
- en ce que cette dépression se situe dans la plage allant de 10 à 100 Pa,
- en ce que le dispositif comprend également des lances de drainage (19, 20) qui sont placées dans la décharge dans la zone de creusement, qui ont une forme tubulaire et qui comportent une pointe (25) et des trous latéraux (21) pour l'aspiration de gaz et de liquides contenus dans la décharge (1), les lances de drainage (19, 20) pouvant être réunies en rangées et débouchant dans un tuyau d'aspiration commun (27),
- en ce que chacune des lances de drainage (19, 20) comporte des moyens d'entraînement (26) pour générer un mouvement rotatif axial,
- en ce qu'il est prévu des seconds dispositifs d'aspiration (28) à l'aide desquels on peut générer une dépression à l'intérieur des lances de drainage (19, 20) afin d'aspirer les gaz et les liquides contenus dans la décharge (1), et
- en ce que des moyens sont prévus pour amener vers le traitement de récupération qui a lieu dans le dispositif de récupération (2) le produit des premiers et des seconds dispositifs d'aspiration (16, 28).

2. Dispositif selon la revendication 1, caractérisé en ce que la zone préliminaire (3) et la zone de creusement (9) sont réunies sous un recouvrement et en ce que les moyens mécaniques prévus pour transporter les déchets extraits de la zone de creusement (9) vers la zone préliminaire (3) se composent de grues à grappins (4).

3. Dispositif selon la revendication 1, caractérisé en ce que la zone de creusement (9) est séparée de la zone préliminaire (3) par une zone intermédiaire non couverte et non soumise à une dépression.

4. Dispositif selon la revendication 3, caractérisé
- en ce que les moyens mécaniques prévus pour transporter les déchets extraits de la zone de creusement (9) vers la zone préliminaire (3) se composent d'une installation à bande transporteuse (31),
- en ce qu'il est prévu un tunnel (30) dans lequel l'installation à bande transporteuse (31) est montée et qui s'étend de la zone de creusement (9) à la zone préliminaire (3),
- le tunnel (30) étant d'un côté étanche à l'air et comportant de l'autre côté des raccordements étanches à l'air avec les parois (8) de la zone préliminaire (3) et de la zone de creusement (9).

5. Dispositif selon la revendication 3, caractérisé
- en ce que les moyens mécaniques prévus pour transporter les déchets extraits de la zone de creusement (9) vers la zone préliminaire (3) se composent de véhicules transporteurs (32) qui ont une structure étanche à l'air et apte à être soumise à une dépression,
- en ce que la zone de creusement (9) et la zone préliminaire (3) comportent chacune au moins un sas à air (33) par lequel les véhicules transporteurs (32) peuvent entrer et sortir sans interrompre la dépression formée dans la zone de creusement (9) et dans la zone préliminaire (3),
- en ce que la zone de creusement (9) est reliée à la zone préliminaire (3) par une première canalisation qui est elle-même reliée au premier dispositif d'aspiration (16) et grâce à laquelle la dépression peut être formée et maintenue dans la zone de creusement (9), et
- en ce que la zone de creusement (9) est reliée à la zone préliminaire (3) par une seconde canalisation dans laquelle débouchent les tuyaux d'aspiration (27) des lances de drainage (19, 20) et qui est elle-même reliée dans la zone préliminaire (3) à un second dispositif d'aspiration (28) qui peut former et maintenir la dépression dans les lances de drainage (19, 20).

6. Dispositif selon la revendication 3, caractérisé
- en ce que la zone de creusement (9) a son propre dispositif d'aspiration pour générer la dépression prévue,
- en ce que la zone de creusement (9) comporte un dispositif de récupération pour l'air sortant du dispositif d'aspiration (16) qui est chargé de gaz et de poussières nocifs, et
- en ce que l'installation formée de lances de drainage (19, 20) comporte, à l'intérieur de la zone de creusement (9), son propre dispositif d'aspiration (28) qui est disposé de telle sorte que les liquides et les boues aspirés puissent être chargés sur les véhicules transporteurs (32) à l'intérieur de la zone de creusement (9) soumise à une dépression.

7. Dispositif selon la revendication 1, caractérisé en ce que les lances de drainage (19) sont cylindriques.

8. Dispositif selon la revendication 1, caractérisé en ce que les lances de drainage (29) se composent de sections cylindriques de faible diamètre et de sections cylindriques de grand diamètre, les sections cylindriques étant reliées par des sections de forme tronconique et les trous (21) étant prévus uniquement sur les sections cylindriques de faible diamètre.

9. Dispositif selon la revendication 7 ou 8, caractérisé en ce que les lances de drainage (19, 20) sont placées directement dans le terril (1).

10. Dispositif selon la revendication 7 ou 8, caractérisé en ce que les lances de drainage (19, 20) sont placées dans des tuyaux de drainage percés qui sont eux-mêmes placés dans le terril (1).

11. Procédé pour l'élimination de décharges (1) à l'aide d'un dispositif de récupération (2) fonctionnant à des températures élevées, de moyens mécaniques pour creuser dans la décharge (1) et de moyens pour emmener les déchets extraits, caractérisé
- en ce que la décharge (1) est couverte au moins dans la zone de creusement (9) par un toit (6) et des parois latérales formées de bâches (13),
- en ce que la zone préliminaire (3) du dispositif de récupération (2) est également couverte par un toit (6) et des parois (8),
- en ce que les recouvrements sont rendus étanches à l'air et soumis à une dépression dans la plage allant de 10 à 100 Pa,
- en ce qu'on place dans la décharge (1), dans la partie inférieure de la zone de creusement, des lances de drainage (19, 20) dans lesquelles on crée également une dépression et qui peuvent aspirer les gaz et les liquides qui sont contenus et qui se forment dans la décharge,
- en ce que les gaz, poussières et aérosols qui sont aspirés à partir de la zone de creusement (9) sont amenés à un dispositif de récupération, et
- en ce que les gaz et les liquides qui sont aspirés à l'aide des lances de drainage (19, 20) sont amenés au dispositif de récupération (2).

12. Procédé pour l'élimination de décharges (1) selon la revendication 11, caractérisé en ce que le transport des déchets extraits se fait à l'aide d'une installation à bande transporteuse (31) qui s'étend dans un tunnel (30) soumis à une dépression.

13. Procédé pour l'élimination de décharges (1) selon la revendication 11, caractérisé en ce que le transport des déchets extraits se fait à l'aide de véhicules de transport (32) dont l'espace de chargement est apte à être soumis à une dépression.
